(19) Europäisches Patentamt
European Patent Office
Office européen des brevets

(11) EP 0 922 716 B1

(12) **EUROPÄISCHE PATENTSCHRIFT**

(45) Veröffentlichungstag und Bekanntmachung des Hinweises auf die Patenterteilung:
**12.02.2003 Patentblatt 2003/07**

(51) Int Cl.[7]: **C08F 210/02**, C08F 2/00, B01J 19/24, C10L 1/18

(21) Anmeldenummer: **98122494.2**

(22) Anmeldetag: **27.11.1998**

(54) **Verfahren zur Herstellung von Ethylen-Terpolymeren und deren Verwendung als Zusatz zu Mineralöl und Mineralöldestillaten**

Process for the manufacture of terpolymers of ethylene and their use as additives to mineral oil and mineral oil distillates

Procédé de préparation de terpolymères d'éthylène et leur utilisation comme additifs à l'huile minérale et aux distillats d'huile minérale

(84) Benannte Vertragsstaaten:
**BE DE ES FR GB IT NL**

(30) Priorität: **09.12.1997 DE 19754555**

(43) Veröffentlichungstag der Anmeldung:
**16.06.1999 Patentblatt 1999/24**

(73) Patentinhaber: **Clariant GmbH**
**65929 Frankfurt am Main (DE)**

(72) Erfinder:
- **Krull, Matthias Dr.**
**46147 Oberhausen (DE)**
- **Reimann, Werner Dr.**
**65929 Frankfurt (DE)**
- **Zoller, Wilhelm Dr.**
**46147 Oberhausen (DE)**
- **Bühnen, Heinz Dieter Dr.**
**46119 Oberhausen (DE)**
- **Bettermann, Gerhard Dr.**
**46562 Vörde (DE)**

(56) Entgegenhaltungen:
**EP-A- 0 174 244**
**EP-A- 0 245 773**
**EP-A- 0 271 738**
**EP-A- 0 575 873**
**DE-A- 2 403 516**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Terpolymerisaten aus Ethylen, einem oder mehreren Vinyl- oder Acrylestern sowie weiteren olefinisch ungesättigten Verbindungen, sowie die Verwendung der so erhaltenen Copolymeren zur Verbesserung der Kaltfließeigenschaften von Mineralölen und Mineralöldestillaten.

Rohöle und durch Destillation von Rohölen gewonnene Mitteldestillate wie Gasöl, Dieselöl oder Heizöl enthalten je nach Herkunft der Rohöle unterschiedliche Mengen an n-Paraffinen, die bei Erniedrigung der Temperatur als plättchenförmige Kristalle auskristallisieren und teilweise unter Einschluß von Öl agglomerieren. Durch diese Kristallisation und Agglomeration kommt es zu einer Verschlechterung der Fließeigenschaften der Öle bzw. Destillate, wodurch bei Gewinnung, Transport, Lagerung und/oder Einsatz der Mineralöle und Mineralöldestillate Störungen auftreten können. Beim Transport von Mineralölen durch Rohrleitungen kann das Kristallisationsphänomen vor allem im Winter zu Ablagerungen an den Rohrwänden, in Einzelfällen, z.B. bei Stillstand einer Pipeline, sogar zu deren völliger Verstopfung führen. Bei Lagerung und Weiterverarbeitung der Mineralöle kann es ferner im Winter erforderlich sein, die Mineralöle in beheizten Tanks zu lagern. Bei Mineralöldestillaten kommt es als Folge der Kristallisation gegebenenfalls zu Verstopfungen der Filter in Dieselmotoren und Feuerungsanlagen, wodurch eine sichere Dosierung der Brennstoffe verhindert wird und unter Umständen eine völlige Unterbrechung der Kraftstoff- bzw. Heizmittelzufuhr eintritt.

Neben den klassischen Methoden zur Beseitigung der auskristallisierten Paraffine (thermisch, mechanisch oder mit Lösungsmitteln), die sich lediglich auf die Entfernung der bereits gebildeten Ausfällung beziehen, wurden in den letzten Jahren chemische Additive (sogenannte Fließverbesserer) entwickelt. Diese bewirken durch physikalisches Zusammenwirken mit den ausfallenden Paraffinkristallen, daß deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl kleinerer Paraffinkristalle mit veränderter Kristallform entsteht. Die modifizierten Paraffinkristalle neigen weniger zur Agglomeration, so daß sich die mit diesen Additiven versetzten Öle noch bei Temperaturen pumpen bzw. verarbeiten lassen, die oft mehr als 20° tiefer liegen als bei nicht additivierten Ölen.

Typische Fließverbesserer für Mineralöle und Mineralöldestillate sind Co- und Terpolymere des Ethylens mit Carbonsäureestem des Vinylalkohols, Estern der Acryl- oder Methacrylsäure und/oder Olefinen.

EP-A-0 493 769 offenbart Terpolymere aus Ethylen, 5 - 35 Gew.-% Vinylacetat und 1 - 25 Gew.-% Neononan- bzw. Neodecansäurevinylester, ein Verfahren zu ihrer Herstellung und ihre Verwendung als Fließverbesserer für Mitteldestillate.

DE-A-19 620 118 offenbart Terpolymere aus Ethylen, Vinylestem und 4-Methylpenten, die eine verbesserte Löslichkeit besitzen, ein Verfahren zu ihrer Herstellung sowie daraus hergestellte Additivkonzentrate mit abgesenktem Eigenstockpunkt.

EP-A-0 203 554 offenbart die Verwendung von Terpolymeren, die neben Ethylen 0,5 bis 20 Gew.-% Diisobutylen und 20 bis 35 Gew.-% Vinylacetat (bezogen auf das Terpolymere) enthalten, und die eine mittlere Molekülmasse von 500 bis 10 000 aufweisen, als Additive für Mineralöle und Mineralöldestillate.

EP-A-0 099 646 offenbart Terpolymere aus Ethylen, Vinylacetat und Isoolefinen mit Molekülmassen von 1500 bis 5500, 10 bis 20 Gew.-% Vinylacetat, 3 bis 15 Gew.-% eines Isoolefins und 6 bis 15 Methylgruppen je 100 Methylengruppen, die nicht vom Vinylacetat stammen.

EP-A-0 648 257 offenbart Terpolymere aus Ethylen und 2 Vinylestern, die Säurereste mit höchstens 8 Kohlenstoffatomen tragen, als Bestandteile einer Brennstoffölzusamensetzung.

EP-A-0 649 445 offenbart Terpolymere aus Ethylen und zwei Vinyl- und/oder Acrylestern mit einem Anteil von bis zu 10 rnol.-%, wobei die Ester Seitenketten von höchstens 8 Kohlenstoffatomen tragen, als Bestandteil von Brennstoffölzusammensetzungen.

EP-A-0 271 738 offenbart ein Verfahren zur Herstellung von Copolymeren aus Ethylen und Estern des Vinylalkohols, der Acrylsäure oder der Methacrylsäure durch Polymerisation von Monomerenströmen unterschiedlicher quantitativer Zusammensetzung in einem Rohrreaktor, sowie die Verwendung dieser Copolymere als Fließverbesserer.

Die nach dem Verfahren des Standes der Technik (EP 271 738) hergestellten Terpolymere haben jedoch nicht die Eigenschaften, die man aufgrund ihrer Monomerzusammensetzung von Ihnen erwarten würde. So verschlechtem die auf diese Weise hergestellten Terpolymere häufig die Filtrierbarkeit der Öle, in denen sie enthalten sind oder ihre Wirksamkeit ist in vielen Fällen unbefriedigend. So sind die Terpolymere gemäß EP-A-0 493 769 sehr gut löslich, doch fehlt es ihnen in bestimmten Ölen an Wirksamkeit. Die nach dem Verfahren aus EP-A-0 271 738 hergestellten Produkte haben eine verbesserte Wirksamkeit, sie beeinträchtigen die mit ihnen additivierten Öle jedoch in ihrer Filtrierbarkeit.

Somit bestand die Aufgabe darin, ein neues Verfahren zur Terpolymerisation zu finden, das zu Terpolymeren führt, deren Eigenschaften über die spezifischen Eigenschaften der verschiedenen Monomere besser steuerbar sind.

Überraschenderweise wurde gefunden, daß sich verbesserte Terpolymere aus Ethylen und mindestens zwei weiteren Comonomeren dann erhalten lassen, wenn man die Terpolymerisation in einem Rohrreaktor mit Seitenast

durchführt und die Zufuhr der frischen Comonomeren so vornimmt, daß ihre Zufuhr getrennt voneinander über verschiedene Reaktoreingänge erfolgt.

Bei den olefinisch ungesättigten Verbindungen, die die weiteren Comonomere ausmachen, handelt es sich vorzugsweise um Vinylester, Acrylester, Methacrylester, Alkylvinylether und/oder Alkene.

Bei den Vinylestern handelt es sich vorzugsweise um solche der Formel 1

$$CH_2{=}CH\text{-}OCOR^1 \qquad (1)$$

worin $R^1$ $C_1$- bis $C_{30}$-Alkyl, vorzugsweise $C_1$- bis $C_{16}$-Alkyl, speziell $C_1$- bis $C_{12}$-Alkyl bedeutet.

In einer weiteren bevorzugten Ausführungsform steht $R^1$ für einen Neoalkylrest mit 7 bis 11 Kohlenstoffatomen, insbesondere mit 8, 9 oder 10 Kohlenstoffatomen. Geeignete Vinylester umfassen Vinylacetat, Vinylpropionat, 2-Ethylhexansäurevinylester, Vinyllaurat, Neononan-, Neodecan- und Neoundecansäurevinylester.

Bei den Acrylestern handelt es sich vorzugsweise um solche der Formel 2

$$CH_2{=}CR^2\text{-}COOR^3 \qquad (2)$$

worin $R^2$ Wasserstoff oder Methyl und $R^3$ $C_1$- bis $C_{30}$-Alkyl, vorzugsweise $C_1$- bis $C_{16}$-Alkyl, speziell $C_1$- bis $C_{12}$-Alkyl bedeutet. Geeignete Acrylester umfassen Methylacrylat, Methylmethacrylat, Ethylacrylat und 2-Ethylhexylacrylat.

Bei den Alkylvinylethern handelt es sich vorzugsweise um Verbindungen der Formel 3

$$CH_2{=}CH\text{-}OR^4 \qquad (3)$$

worin $R^4$ $C_1$- bis $C_{30}$-Alkyl, vorzugsweise $C_1$- bis $C_{16}$-Alkyl, speziell $C_1$- bis $C_{12}$-Alkyl bedeutet.

Bei den Alkenen handelt es sich vorzugsweise um einfach ungesättigte Kohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Isobutylen, Diisobutylen, 4-Methylpenten, Hexen, Octen und Norbornen.

Besonders bevorzugt sind Terpolymere, bei denen einer der Reste $R^1$, $R^3$ oder $R^4$ $C_1$- oder $C_2$- und der andere Rest $R^1$, $R^3$ oder $R^4$ $C_4$- bis $C_{16}$-, insbesondere $C_6$- bis $C_{12}$-Alkyl oder ein Alken ist.

In einer bevorzugten Ausführungsform der Erfindung erfolgt die Zuführung der Frischmonomeranteile im Hauptstrom und in einem Sekundärstrom. Im Hauptstrom wird Ethylen im Gemisch mit einem der beiden weiteren Comonomere zugeführt. Im Sekundärstrom wird Ethylen im Gemisch mit dem anderen Comonomeren zugeführt.

In einer weiteren bevorzugten Ausführungsform der Erfindung erfolgt die Zuführung der Frischmonomeranteile im Hauptstrom und in zwei Sekundärströmen. In dieser Ausführungsform gibt es verschiedene bevorzugte Varianten:

A) Im Hauptstrom wird Ethylen im Gemisch mit einem der beiden weiteren Comonomere zugeführt. In jedem der Sekundärströme wird Ethylen im Gemisch mit dem anderen der weiteren Comonomeren zugeführt. Der Anteil der weiteren Comonomere in den Sekundärströmen kann gleich oder verschieden sein.

B) Im Hauptstrom wird Ethylen, im ersten Sekundärstrom eines der weiteren Comonomere und im zweiten Sekundärstrom das zweite der weiteren Comonomere zugeführt.

In einer weiteren bevorzugten Ausführungsform der Erfindung erfolgt die Zuführung der Frischmonomeranteile im Hauptstrom und in drei Sekundärströmen. In diesen Fällen ist es bevorzugt, über den Primärstrom und einen Sekundärstrom ein Gemisch aus Ethylen und einem weiteren Comonomeren zuzuführen, und über die beiden weiteren Sekundärströme ein Gemisch aus Ethylen und dem anderen der Comonomeren. Eine besonders bevorzugte Ausführungsform besteht darin, im Primärstrom ein Gemisch aus Ethylen und einem weiteren Comonomeren und in allen drei Sekundärströmen ein Gemisch aus Ethylen und dem anderen Comonomeren zuzuführen. In einer weiteren Ausführungsform wird Ethylen im Primärstrom, ein weiteres Comonomers im ersten Sekundärstrom und das andere Comonomer in den beiden verbleibenden Sekundärströmen zugeführt.

In entsprechender Weise kann die Terpolymerisation auch in Rohrreaktoren mit 4 oder mehr Sekundärströmen durchgeführt werden.

Es ist bevorzugt, das Comonomere mit niedrigerem Copolymerisationsfaktor im Primärstrom zuzuführen. Weiterhin ist bevorzugt, das Comonomer mit höherem Siedepunkt im Primärstrom zuzuführen.

Im allgemeinen werden die nicht verbrauchten Restmonomere im Kreis geführt und wieder in den Reaktor

eingespeist. Die Wiedereinspeisung kann, gegebenenfalls nach Auftrennung des Restmonomergemisches, in Primär- und/oder Sekundärstrom erfolgen. Sie erfolgt vorzugsweise im Sekundärstrom.

Die Polymerisation erfolgt vorzugsweise bei Drücken von 50 bis 400 MPa, bevorzugt von 120 bis 300 MPa und Temperaturen von 150 bis 350°C, bevorzugt 100 bis 300°C. Als Polymerisationsinitiatoren werden vorteilhaft Sauerstoff, Hydroperoxide, Peroxide und Azoverbindungen in Form einer 1 bis 30 Gew.-%igen Lösung eingesetzt. Geeignete Lösungsmittel sind insbesondere aliphatische Kohlenwasserstoffe und Kohlenwasserstoffgemische.

Nach dem erfindungsgemäßen Verfahren werden dem Reaktor mindestens zwei unterschiedlich zusammengesetzte Monomerenströme zugeführt. Der eine Monomerenstrom (Primärstrom) wird über den Reaktoreingang in den Reaktor geleitet. Mindestens ein zweiter Monomerenstrom (Sekundärstrom) gelangt über mindestens einen Seitenast in den Reaktor. Unter dem Begriff Seitenast wird jede Einspeisestelle längs des Reaktors verstanden, über die Monomere und/oder Polymerisationshilfsmittel, nämlich Initiatoren und Regler, dem Reaktor zugeführt werden können.

Im Primärstrom beträgt der Comonomerenanteil vorzugsweise 3 bis 200 Gew.-Teile, insbesondere 7 bis 100 Gew.-Teile je 100 Gew.-Teile Ethylen.

Im Sekundärstrom sind je 100 Gew.-Teile Ethylen, vorzugsweise 10 bis 500 Gew.-Teile, insbesondere 20 bis 300 Gew.-Teile des weiteren Comonomeren enthalten.

Bevorzugte Initiatorgehalte im Primärstrom sind 50 bis 10000 Gew.-ppm, vorzugsweise 50 bis 1000 ppm und im Sekundärstrom 100 bis 10000 Gew.-ppm, vorzugsweise 200 bis 2000 Gew.-ppm, jeweils bezogen auf das Monomerengemisch.

Zur Einstellung der Molmasse werden dem Primär- und dem Sekundärstrom im allgemeinen Polymerisationsregler zugesetzt. Je nach Art des Reglers und der gewünschten Viskosität, die ein Maß für die Molmasse ist, ist die Reglerkonzentration in den beiden Strömen gleich oder verschieden und beträgt vorzugsweise 0,05 bis 20 Gew.-%, bezogen auf das Monomerengemisch. Regler sind beispielsweise Wasserstoff, gesättigte oder ungesättigte Kohlenwasserstoffe wie z.B. Propan oder Propen, Aldehyde wie z.B. Propionaldehyd, n-Butyraldehyd oder iso-Butyraldehyd, Ketone wie z.B. Aceton, Methylethylketon, Methylisobutylketon, Cyclohexanon oder Alkohole wie z.B. Butanol. Der Primärstrom enthält vorzugsweise 0,1 bis 10, der Sekundärstrom 0,1 bis 5 Gew.-% Regler, bezogen auf das Monomerengemisch.

Reaktoreingang und Seitenast bzw. Seitenästen werden im Regelfall etwa gleiche Volumina des Monomerengemisches zugeführt, d.h. das Volumenverhältnis von Primär- und Sekundärstrom ist etwa 1 : 1. Es ist aber durchaus möglich, mit anderen Volumenverhältnissen zu arbeiten. Bewährt hat es sich, zwischen Primär- und Sekundärstrom einen Bereich von 1: 0,2 bis 5 (in Vol.-Teilen) insbesondere 1:0,3 bis 3 einzuhalten.

Der Sekundärstrom kann über einen einzigen Seitenast oder in Teilströmen über mehrere Seitenäste in den Reaktor eingeleitet werden. Vorzugsweise arbeitet man mit 1 bis 3 und insbesondere mit 3 Teilströmen.

Die Menge des über die einzelnen Seitenäste dem Reaktor zugeführten Sekundärstrom-Anteils richtet sich nach dem Temperaturbereich, d.h. Maximumund Minimumtemperatur, der im Reaktor eingehalten werden soll.

Die nach dem erfindungsgemäßen Verfahren hergestellten Ethylen-Terpolymerisate enthalten je 100 Gew. -Teile Ethylen, 15 bis 55 Gew.-Teile Comonomere. Um diese Zusammensetzung im Polymerisat zu erreichen, ist es erforderlich, unter den gewählten Reaktionsbedingungen Comonomerengemische einzusetzen, die den Copolymerisationsparametem der eingesetzten Comonomere Rechnung tragen und insgesamt (also als Summe der Anteile im Primär- und im Sekundärstrom) etwa 2 bis 40 Gew.-% weitere Comonomere enthalten.

Die erfindungsgemäß erhaltenen Ethylen-Copolymerisate haben im allgemeinen eine Viskosität, gemessen bei 140°C mit Rotationsviskosimeter (z. B. von Firma Haake) gemäß EN 3219 zwischen 30 und 10.000 mPas, vorzugsweise 50 und 5.000 mPas, insbesondere 50 und 1000 mPas. Die Viskosität wird in bekannter Weise durch den Zusatz von Polymerisationsreglern zum Monomerengemisch eingestellt.

Die erfindungsgemäßen Terpolymerisate enthalten Methylgruppen, die einerseits auf die Struktur der Comonomermoleküle wie z.B. auf $CH_3$-Gruppen der Neocarbonsäurevinylester, endständiger $CH_3$-Gruppen der Alkylreste oder von Olefinen und andererseits auf den Polymerisationsmechanismus des Ethylens zurückgehen. Die Bestimmung der Anzahl der Methylgruppen erfolgt z.B. durch $^1H$-NMR-Spektroskopie. Bevorzugt weisen die Terpolymerisate 2 bis 15, insbesondere 3 bis 11 $CH_3$-Gruppen je 100 $CH_2$-Gruppen auf, ausgenommen solche $CH_3$-Gruppen, die vom Vinylacetat als Vinylester herrühren.

Vorzugsweise führt man die Polymerisation in an sich bekannten rohrförmigen Reaktoren durch, die ein Verhältnis von Länge zu Durchmesser im Bereich von etwa 10.000 : 1 bis 100.000 : 1 aufweisen. Bevorzugt liegt die untere Grenze für dieses Verhältnis bei etwa 20.000 : 1, insbesondere bei etwa 25.000 : 1. Die obere Grenze liegt vorzugsweise bei etwa 80.000 : 1, insbesondere bei etwa 60.000 : 1. Rohrreaktoren haben üblicherweise eine Länge von etwa 200 bis 4.000 m, wobei die untere Grenze vorzugsweise bei etwa 250 m, die obere Grenze vorzugsweise bei etwa 3.000 m, insbesondere 2.000 m liegt.

Die Regelung der Temperatur erfolgt nach dem Stand der Technik durch Kühlung des Rohrreaktors und durch den Sekundärstrom, der über mindestens einen Seitenast in den Reaktor eingeführt wird. Die Temperatur des Sekundärstroms beträgt 0 bis 60°C. Die Einspeisestellen für den Sekundärstrom in dem Rohrreaktor werden so gewählt,

daß 2 bis 4 Reaktionszonen entstehen, in denen das Reaktionsgemisch etwa gleiche Verweilzeit hat.

Die erfindungsgemäß hergestellten Polymerisate werden Mineralölen bzw. Mineralöldestillaten in Form von Lösungen oder Dispersionen, die 1 bis 90 Gew.-%, insbesondere 10 bis 80 Gew.-% (bezogen auf die Lösung) der Polymerisate enthalten, zugesetzt. Als Lösungsmittel geeignet sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, Shellsol AB, Solvesso 150, Solvesso 200, Exxsol-, Isopar- und Shellsol D-Typen. Besonders geeignet ist Kerosin. Durch die neuen polymeren Verbindungen in ihren rheologischen Eigenschaften verbesserte Mineralöle bzw. Mineralölfraktionen enthalten vorzugsweise 0,001 bis 2, insbesondere 0,005 bis 0,5 Gew.-% Copolymerisat.

Die erfindungsgemäßen Copolymerisate können als Fließverbesserer weiterhin in Form von Mischungen verwendet werden, die aus Polymeren der beanspruchten Art, jedoch unterschiedlicher qualitativer und/oder quantitativer Zusammensetzung und/oder unterschiedlicher (bei 140°C gemessener) Viskosität bestehen. Das Mischungsverhältnis (in Gewichtsteilen) der Copolymeren kann über einen weiten Bereich variiert werden und z.B. 20:1 bis 1:20, vorzugsweise 10:1 bis 1:10 betragen. Auf diesem Wege lassen sich die Fließverbesserer gezielt individuellen Anforderungen anpassen.

Zur Herstellung von Additivpaketen für spezielle Problemlösungen können die erfindungsgemäß hergestellten Polymerisate auch zusammen mit einem oder mehreren öllöslichen Co-Additiven eingesetzt werden, die bereits für sich allein die Kaltfließeigenschaften von Rohölen, Schmierölen oder Brennölen verbessern. Beispiele solcher Co-Additive sind Vinylacetat enthaltende Copolymerisate oder Terpolymerisate des Ethylens, polare Verbindungen, die eine Paraffindispergierung bewirken (Paraffindispergatoren), sowie Kammpolymere.

So haben sich Mischungen der erfindungsgemäßen Terpolymerisate mit Copolymerisaten hervorragend bewährt, die 10 bis 40 Gew.-% Vinylacetat und 60 bis 90 Gew.-% Ethylen enthalten. Nach einer weiteren Ausgestaltung der Erfindung setzt man die erfindungsgemäß hergestellten Terpolymerisate in Mischung mit Ethylen/Vinylacetat/ Neononansäurevinylester-Terpolymerisaten oder EthylenVinylacetat/ Neodecansäurevinylester-Terpolymerisaten zur Verbesserung der Fließfähigkeit von Mineralölen oder Mineralöldestillaten ein. Die Terpolymerisate der Neononansäurevinylester bzw. der Neodecansäurevinylester enthalten außer Ethylen 10 bis 35 Gew.-% Vinylaceat und 1 bis 25 Gew.-% der jeweiligen Neoverbindung. Das Mischungsverhältnis der erfindungsgemäß hergestellten Terpolymerisate mit den vorstehend beschriebenen Ethylen/Vinylacetat-Copolymerisaten bzw. den Terpolymerisaten aus Ethylen, Vinylacetat und den Vinylestern der Neononan- bzw. der Neodecansäure beträgt (in Gewichtsteilen) 20:1 bis 1:20, vorzugsweise 10:1 bis 1:10.

Zur Verwendung als Fließverbesserer können die erfindungsgemäß hergestellten Terpolymerisate ferner in Mischung mit Paraffindispergatoren eingesetzt werden. Diese Additive reduzieren die Größe der Paraffinkristalle und bewirken, daß die Paraffinpartikel sich nicht absetzen, sondern kolloidal mit deutlich reduziertem Sedimentationsbestreben, dispergiert bleiben. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Andere Paraffindispergatoren sind Copolymere des Maleinsäureanhydrids und $\alpha,\beta$-ungesättigter Verbindungen, die gegebenenfalls mit primären Monoalkylaminen und/oder aliphatischen Alkoholen umgesetzt werden können (vgl. EP 0 154 177), die Umsetzungsprodukte von Alkenylspirobislactonen mit Aminen (vgl. EP 0 413 279) und nach EP 0 606 055 Umsetzungsprodukte von Terpolymeren auf Basis $\alpha,\beta$-ungesättigter Dicarbonsäureanhydride, $\alpha,\beta$-ungesättigter Verbindungen und Polyoxyalkylenether niederer ungesättigter Alkohole.

Schließlich werden in einer weiteren bewährten Variante der Erfindung die erfindungsgemäß hergestellten Terpolymerisate zusammen mit Kammpolymeren als Fließverbesserer verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers-Structure and Properties; N.A. Platé and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP 0 153 176 A1), Copolymere aus einem $C_6$- bis $C_{24}$-$\alpha$-Olefin und einem N-$C_6$- bis $C_{22}$-Alkylmaleinsäureimid (vgl. EP 0 320 766), ferner veresterte Olefin/Maleinsäureanhydrid-Copolymere, Polymere und Copolymere von $\alpha$-Olefinen und veresterte Copolymere von Styrol und Maleinsäureanhydrid.

Beispielsweise können Kammpolymere durch die Formel

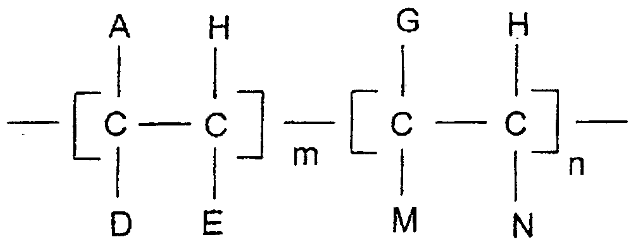

beschrieben werden. Darin bedeuten

- A R', COOR', OCOR', R"-COOR' oder OR';
- D H, $CH_3$, A oder R";
- E H oder A;
- G H, R", R"-COOR', einen Arylrest oder einen heterocyclischen Rest;
- M H, COOR", OCOR", OR" oder COOH;
- N H, R", COOR", OCOR, COOH oder einen Arylrest;
- R' eine Kohlenwasserstoffkette mit 8-50 Kohlenstoffatomen;
- R" eine Kohlenwasserstoffkette mit 1 bis 10 Kohlenstoffatomen;
- m eine Zahl zwischen 0,4 und 1,0; und
- n eine Zahl zwischen 0 und 0,6.

Das Mischungsverhältnis (in Gewichtsteilen) der erfindungsgemäß hergestellten Terpolymerisate mit Paraffindispergatoren bzw. Kammpolymeren beträgt jeweils 1:10 bis 20:1, vorzugsweise 1:1 bis 10:1.

Die erfindungsgemäßen Polymerisate verbessern die Fließfähigkeit sowohl von Mineralölen, Ölen pflanzlichen oder tierischen Ursprungs als auch von Mineralöldestillaten. Sie beeinträchtigen auch oberhalb des Cloud Points die Filtrierbarkeit der mit ihnen additivierte Öle nicht. Unter dem Begriff Mineralöle werden insbesondere Rohöle, Destillationsrückstände und Mineralöldestillate verstanden. Als Mineralöldestillate werden Kohlenwasserstofffraktionen mit einer Siedetemperatur zwischen etwa 150 und 450°C bezeichnet. Hierzu gehören beispielsweise Petroleum, leichte Heizöle und Dieselkraftstoff. Von besonderer Bedeutung sind die Mitteldestillate wie Heizöl EL und Dieselkraftstoff.

Die Polymerisate können allein oder auch zusammen mit anderen Additiven verwendet werden, z.B. mit anderen Stockpunkterniedrigern oder Entwachsungshilfsmitteln, mit Korrosionsinhibitoren, Antioxidantien, Schlamminhibitoren, Lubricity-Additiven, Dehazern und Zusätzen zur Erniedrigung des Cloud-Points.

Die Wirksamkeit der erfindungsgemäßen Polymerisate als Fließpunktverbesserer wird durch die nachfolgenden Beispiele näher erläutert.

Die Wirksamkeit der untersuchten Copolymerisate zur Verbesserung der Fließfähigkeit wird anhand des "Kalt-Filter-Verstopfungspunkt-Tests" (CFPP-Test) beschrieben. Die Durchführung des Tests erfolgt nach EN 116. Sie ist auch im J. Inst. Petro. Bd. 52, Juni 1966, Seite 173 bis 185, publiziert. Zur Prüfung werden verschiedene Mineralöldestillate, Testöle 1 bis 3, eingesetzt.

Beispiele

Beispiel 1

Die Polymerisation erfolgt in einem Röhrenreaktor von 500 m Länge mit einem mittleren Durchmesser von 30 mm und 3 Seitenästen bei 210°C und 200 MPa unter Verwendung von Peroxiden, die in einem Kohlenwasserstoffgemisch gelöst sind, als Initiator. Der Primärgasstrom wird dem Reaktoreingang zugeführt; der Sekundärgasstrom wird über die drei Seitenäste im Gewichtsverhältnis 1:1,3:1,6 in den Reaktor eingeleitet. Die Einspeisestellen für das Monomeren-Gemisch sind so gewählt, daß vier Reaktionszonen entstehen, in denen das Reaktionsgemisch jeweils etwa gleiche Verweilzeit hat. Das Polymerisationsgemisch wird über einen Hochdruck- und einen Niederdruckabscheider entspannt und das Polymerisat von den nicht umgesetzten Monomeren abgetrennt. Die Rest-Monomere und Frisch-Ethylen werden wieder auf Reaktionsdruck komprimiert und zu gleichen Teilen auf Primär- und Sekundärgasstrom verteilt in den Reaktor zurückgeführt. Die Zugabe von frischem Neodecansäurevinylester erfolgt in den Primärstrom; Vinylacetat und Methylethylketon werden in den Sekundärstrom dosiert. Die Einstellung der Reaktionstemperatur erfolgt durch dosierte Initiatorzugabe.

| | |
|---|---|
| Ethylen: | 720 Gew.-Teile |
| Vinylacetat: | 605 Gew.-Teile |
| Neodecansäurevinylester | 192 Gew.-Teile |
| Methylethylketon (MEK) | 92 Gew.-Teile |

Beispiel 2

Die Polymerisation wird entsprechend Beispiel 1 bei 240°C und 170 MPa mit folgender Zusammensetzung der Gasströme durchgeführt:

| | |
|---|---|
| Ethylen: | 1000 Gew.-Teile |
| Vinylacetat: | 642 Gew.-Teile |
| Neodecansäurevinylester | 158 Gew.-Teile |
| Methylethylketon (MEK) | 80 Gew.-Teile |

Beispiel 3

Die Polymerisation wird entsprechend Beispiel 1 bei 200°C und 190 MPa mit zwei Einspeisestellen im Sekundärgasstrom durchgeführt. Anstelle von Neodecansäurevinylester wird 4-Methylpenten-1 eingesetzt.

| | |
|---|---|
| Ethylen: | 1000 Gew.-Teile |
| Vinylacetat: | 642 Gew.Teile |
| 4-Methylpenten-1 | 270 Gew.-Teile |
| Methylethylketon (MEK) | 80 Gew.-Teile |

Vergleichsbeispiele 1 und 2

Die Polymerisation wird entsprechend Beispiel 1 bei 200°C und 205 MPa unter Dosierung beider Comonomere in den Sekundärstrom (gemäß EP 271738) durchgeführt:

| | Vgl.-Beispiel 1 | Vgl.-Beispiel 2 |
|---|---|---|
| Ethylen: | 900 Gew.-Teile | 950 Gew.-Teile |
| Vinylacetat: | 418 Gew.-Teile | 642 Gew.-Teile |
| Neodecansäurevinylester | 132 Gew.-Teile | 132 Gew.-Teile |
| Methylethylketon (MEK) | 64 Gew.-Teile | 64 Gew.-Teile |

Vergleichsbeispiel 3

Die Polymerisation wird entsprechend Beispiel 1 bei 205°C und 200 MPa durchgeführt, jedoch mit Dosierung aller Comonomere und des Moderators in das Rückgas, wodurch Primär- und Sekundärgasstrom gleiche Zusammensetzung haben:

| | |
|---|---|
| Ethylen: | 1300 Gew.-Teile |
| Vinylacetat: | 725 Gew.-Teile |
| Neodecansäurevinylester | 259 Gew.-Teile |
| Methylethylketon (MEK) | 96 Gew.-Teile |

Tabelle 1

| Charakterisierung der Additive (Vac = Vinylacetat; Angabe in Gew.-%) | | | |
|---|---|---|---|
| | **Vac** | **$V_{140}$** | **Termonomer** |
| Beispiel 1 | 29,3 % | 218 mPas | 9,4 % VeoVa 10 |

Tabelle 1 (fortgesetzt)

| Charakterisierung der Additive (Vac = Vinylacetat; Angabe in Gew.-%) | | | |
|---|---|---|---|
| | **Vac** | **$V_{140}$** | **Termonomer** |
| Beispiel 2 | 31,7% | 270 mPas | 6,4 % VeoVa 10 |
| Beispiel 3 | 30,4 % | 195 mPas | 4,7 % 4-Methylpenten |
| | | | |
| Vergleich 1 | 27,0 % | 124 mPas | 6,8 VeoVa |
| Vergleich 2 | 34,3 % | 383 mPas | 5,9 VeoVa |
| Vergleich 3 | 31,0% | 120 mPas | 8,2 VeoVa |

Tabelle 2

| Charakterisierung der Testöle: | | | |
|---|---|---|---|
| Die Bestimmung der Siedekenndaten erfolgt gemäß ASTM D-86, die Bestimmung des CFPP-Werts gemäß EN 116 und die Bestimmung des Cloud Points gemäß ISO 3015. | | | |
| | Testöl 1 | Testöl 2 | Testöl 3 |
| Siedebeginn | 184°C | 182°C | 199°C |
| 20 % | 258°C | 236°C | 247°C |
| 30% | 271°C | 253°C | 263°C |
| 90 % | 329°C | 357°C | 355°C |
| 95% | 344°C | 375°C | 374°C |
| Cloud Point | -5°C | 2°C | 2°C |
| CFPP | -9°C | 0°C | -1°C |
| | | | |
| (90-20)% | 71°C | 121°C | 108°C |
| S-Gehalt ppm | 365 | 1835 | 754 |

Löslichkeit der Terpolymerisate

Das Löslichkeitsverhalten der Terpolymerisate wird im British-Rail Test wie folgt bestimmt: 400 ppm einer auf 22°C temperierten Dispersion des Polymerisats in Kerosin werden in 200 ml des auf 22°C temperierten Testöls dosiert und 30 Sekunden kräftig geschüttelt. Nach 24 Stunden Lagerung bei +3°C wird 15 Sekunden geschüttelt und anschließend bei 3°C in drei Portionen von je 50 ml über einen 1,6-µm-Glasfibermicrofilter (Ø 25 mm; Whatman GFA, Best. -Nr. 1820025) filtriert. Aus den drei Filtrationszeiten $T_1$, $T_2$, und $T_3$ wird der ADT-Wert wie folgt berechnet:

$$ADT = \frac{(T_3 - T_1)}{T_2} \cdot 50$$

Ein ADT-Wert ≤ 15 wird als Anhaltspunkt dafür angesehen, daß das Gasöl in "normal" kalter Witterung zufriedenstellend verwendbar ist. Produkte mit ADT-Werten > 25 werden als nicht filtrierbar bezeichnet.

Tabelle 3:

| Filtrierbarkeit des additivierten Testöls 1 | |
|---|---|
| | **ADT** |
| Blindwert (ohne Additiv) | 3,0 |

Tabelle 3: (fortgesetzt)

| Filtrierbarkeit des additivierten Testöls 1 | |
|---|---|
| | **ADT** |
| Beispiel 1 | 6,1 |
| Beispiel 2 | 9,1 |
| Beispiel 3 | 7,4 |
| | |
| Vergleichsbeispiel 1 | 36 |
| Vergleichsbeispiel 2 | 39 |
| Vergleichsbeispiel 3 | 5,4 |

Tabelle 4:

| CFPP-Wirksamkeit | | | | | | | | |
|---|---|---|---|---|---|---|---|---|
| Beisp. | Testöl 2 | | | | Testöl 3 | | | |
| | 50 ppm | 100 ppm | 200 ppm | 300 ppm | 50 ppm | 100 ppm | 200 ppm | 300 ppm |
| 1 | -9 | -13 | -15 | -15 | -8 | -12 | -16 | -17 |
| 2 | -5 | -12 | -14 | -16 | -9 | -13 | -15 | -15 |
| 3 | -6 | -11 | -14 | -17 | -8 | -14 | -16 | -19 |
| | | | | | | | | |
| Vergl. | -7 | -11 | -13 | -16 | -10 | -12 | -13 | -18 |
| Vergl. | -7 | -11 | -14 | -15 | -8 | -13 | -14 | -15 |
| Vergl. | | -2 | -12 | -14 | -1 | -2 | -12 | -4 |

Liste der verwendeten Handelsbezeichnungen

| | |
|---|---|
| Solvent Naphtha<br>®Shellsol AB<br>®Solvesso 150 | aromatische Lösemittelgemische mit Siedebereich 180 bis 210°C |
| ®Solvesso 200 | aromatisches Lösemittelgemisch mit Siedebereich 230 bis 287°C |
| ®Exxsol | Dearomatisierte Lösemittel in verschiedenen Siedebereichen, beispielsweise ®Exxsol D60: 187 bis 215°C |
| ®ISOPAR (Exxon) | isoparaffinische Lösemittelgemische in verschiedenen Siedebereichen, beispielsweise ®ISOPAR L: 190 bis 210°C |
| ®Shellsol D | hauptsächlich aliphatische Lösemittelgemische in verschiedenen Siedebereichen |

**Patentansprüche**

**1.** Verfahren zur Herstellung von Terpolymeren aus Ethylen und mindestens 2 weiteren olefinisch ungesättigten Verbindungen durch Polymerisation in einem mit mindestens einem Seitenast ausgerüsteten Rohrreaktor, **dadurch gekennzeichnet, daß** die Frischmonomeranteile, die dem Rohrreaktor über den Reaktoreingang (der Primärstrom) und über den Seitenast oder die Seitenäste (Sekundärstrom oder Sekundärströme) zugeführt werden, in

jedem der Ströme Ethylen und maximal eine weitere olefinisch ungesättigte Verbindung enthalten.

2. Verfahren nach Anspruch 1, **dadurch gekennzeichnet, daß** der Comonomeranteil im Primärstrom 3 bis 200, vorzugsweise 7 bis 100 Gew.-Teile je 100 Gew.-Teile Ethylen und im Sekundärstrom 10 bis 500 Gew.-Teile, vorzugsweise 20 bis 300 Gew.-Teile je 100 Gew.-Teile Ethylen beträgt.

3. Verfahren nach Anspruch 1 oder 2, **dadurch gekennzeichnet, daß** die Initiatorgehalte im Primärstrom 50 bis 10.000 Gew.-ppm, vorzugsweise 50 bis 1.000 ppm und im Sekundärstrom 100 bis 10000 Gew.-ppm, vorzugsweise 200 bis 2000 Gew.-ppm, jeweils bezogen auf das Monomerengemisch, betragen.

4. Verfahren nach einem oder mehreren der Ansprüche 1 bis 3, **dadurch gekennzeichnet, daß** die Reglerkonzentration im Primär- und Sekundärstrom gleich oder verschieden ist und 0,05 bis 20 Gew.-%, bezogen auf das Monomerengemisch, beträgt.

5. Verfahren nach Anspruch 4, **dadurch gekennzeichnet, daß** die Reglerkonzentration im Primärstrom 0,1 bis 10 Gew.-% und im Sekundärstrom, 0,1 bis 5 Gew.-%, bezogen auf das Monomerengemisch, beträgt.

6. Verfahren nach einem oder mehreren der Ansprüche 1 bis 5, **dadurch gekennzeichnet, daß** das Volumenverhältnis von Primärstrom zu Sekundärstrom 1:0,2 bis 5 beträgt.

7. Verfahren nach einem oder mehreren der Ansprüche 1 bis 6, **dadurch gekennzeichnet, daß** ein, zwei oder drei, insbesondere drei Sekundärströme verwendet werden.

8. Verfahren nach einem oder mehreren der Ansprüche 1 bis 7, **dadurch gekennzeichnet, daß** als Comonomere Vinylester der Formel 1

$$CH_2=CH\text{-}OCOR^1 \qquad (1)$$

worin $R^1$ $C_1$- bis $C_{30}$-Alkyl, vorzugsweise $C_1$- bis $C_{16}$-Alkyl, speziell $C_1$- bis $C_{12}$-Alkyl bedeutet, und beispielsweise Vinylacetat, Vinylpropionat, 2-Ethylhexansäurevinylester, Vinyllaurat und Neononan-, Neodecan- oder Neoundecansäurevinylester verwendet werden.

9. Verfahren nach einem oder mehreren der Ansprüche 1 bis 8, **dadurch gekennzeichnet, daß** als Comonomere Acrylester der Formel 2

$$CH_2=CR^2\text{-}COOR^3 \qquad (2)$$

worin $R^2$ Wasserstoff oder Methyl und $R^3$ $C_1$- bis $C_{30}$-Alkyl, vorzugsweise $C_1$- bis $C_{16}$-Alkyl, speziell $C_1$- bis $C_{12}$-Alkyl bedeutet, und beisielsweise Methylacrylat und 2-Ethylhexylacrylat verwendet werden.

10. Verfahren nach einem oder mehreren der Ansprüche 1 bis 9, **dadurch gekennzeichnet, daß** als Comonomere Alkylvinylether der Formel 3

$$CH_2=CH\text{-}OR^4 \qquad (3)$$

worin $R^4$ $C_1$- bis $C_{30}$-Alkyl, vorzugsweise $C_1$- bis $C_{16}$-Alkyl, speziell $C_1$- bis $C_{12}$-Alkyl bedeutet, verwendet werden.

11. Verfahren nach einem oder mehreren der Ansprüche 1 bis 10, dadurch gekennzeichnet, daß als Comonomere einfach ungesättigte Kohlenwasserstoffe mit 3 bis 30, insbesondere 4 bis 16, speziell 5 bis 12 Kohlenstoffatomen, und vorzugsweise Isobutylen, Diisobutylen, 4-Methylpenten, Hexen, Octen oder Norbornen Verwendung finden.

12. Verwendung der nach einem oder mehreren der Ansprüche 1 bis 10 hergestellten Copolymerisate einzeln oder in Mischungen miteinander als Kaltfließverbesserer für Mineralöle und Mineralöldestillate.

## Claims

1. A process for the preparation of terpolymers of ethylene and at least 2 further olefinically unsaturated compounds by polymerization in a tubular reactor fitted with at least one side branch, wherein the fresh monomer components, which are introduced into the tubular reactor via the reactor inlet (the primary stream) or via the side branch or side branches (secondary stream or secondary streams), in each of the streams contain ethylene and at most one further olefinically unsaturated compound.

2. The process as claimed in claim 1, wherein the comonomer content in the primary stream is from 3 to 200 parts by weight, preferably from 7 to 100 parts by weight, per 100 parts by weight of ethylene, and the comonomer content in the secondary stream is from 10 to 500 parts by weight, preferably from 20 to 300 parts by weight, per 100 parts by weight of ethylene.

3. The process as claimed in claim 1 or 2, wherein the initiator contents in the primary stream are from 50 to 10,000 ppm by weight, preferably from 50 to 1000 ppm by weight, and the initiator contents in the secondary stream are from 100 to 10,000 ppm by weight, preferably from 200 to 2000 ppm by weight, in each case based on the monomer mixture.

4. The process as claimed in one or more of claims 1 to 3, wherein the regulator concentration in the primary and secondary streams is identical or different and is from 0.05 to 20% by weight, based on the monomer mixture.

5. The process as claimed in claim 4, wherein the regulator concentration in the primary stream is from 0.1 to 10% by weight and the regulator concentration in the secondary stream is from 0.1 to 5% by weight, based on the monomer mixture.

6. The process as claimed in one or more of claims 1 to 5, wherein the volume ratio of primary stream to secondary stream is from 1:0.2 to 5.

7. The process as claimed in one or more of claims 1 to 6, wherein one, two or three, in particular three, secondary streams are used.

8. The process as claimed in one or more of claims 1 to 7, wherein the comonomers used are vinyl esters of the formula 1

$$CH_2{=}CH\text{-}OCOR^1 \qquad (1)$$

in which $R^1$ is $C_1$- to $C_{30}$-alkyl, preferably $C_1$- to $C_{16}$-alkyl, especially $C_1$- to $C_{12}$-alkyl, for example vinyl acetate, vinyl propionate, vinyl 2-ethylhexanoate vinyl ester, vinyl laurate, vinyl neononanoate, vinyl neodecanoate or vinyl neoundecanoate.

9. The process as claimed in one or more of claims 1 to 8, wherein the comonomers used are acrylates of the formula 2

$$CH_2{=}CR^2\text{-}COOR^3 \qquad (2)$$

in which $R^2$ is hydrogen or methyl and $R^3$ is $C_1$- to $C_{30}$-alkyl, preferably $C_1$- to $C_{16}$-alkyl, especially $C_1$- to $C_{12}$-alkyl, for example methyl acrylate or 2-ethylhexyl acrylate.

10. The process as claimed in one or more of claims 1 to 9, wherein the comonomers used are alkyl vinyl ethers of the formula 3

$$CH_2{=}CH\text{-}OR^4 \qquad (3)$$

in which $R^4$ is $C_1$- to $C_{30}$-alkyl, preferably $C_1$- to $C_{16}$-alkyl, especially $C_1$- to $C_{12}$-alkyl.

11. The process as claimed in one or more of claims 1 to 10, wherein the comonomers used are monounsaturated hydrocarbons having 3 to 30, in particular 4 to 16, especially 5 to 12, carbon atoms, preferably isobutylene, diisobutylene, 4-methylpentene, hexene, octene or norbornene.

12. The use of the copolymers prepared as claimed in one or more of claims 1 to 10, individually or in mixtures with one another, as cold-flow improvers for mineral oils and mineral oil distillates.

**Revendications**

1. Procédé pour la préparation de terpolymères d'éthylène et d'au moins deux autres composés à insaturation oléfinique par polymérisation dans un réacteur tubulaire muni d'au moins un bras latéral, **caractérisé en ce que** les taux de monomères frais, introduits dans le réacteur tubulaire par l'entrée du réacteur (le flux primaire) et par le bras latéral ou les bras latéraux (le flux secondaire ou les flux secondaires), renferment dans chacun des flux l'éthylène et au maximum un autre composé à insaturation oléfinique.

2. Procédé selon la revendication 1, **caractérisé en ce que** le taux de comonomère dans le flux primaire est de 3 à 200, de préférence de 7 à 100 parties en poids pour 100 parties en poids d'éthylène et dans le flux secondaire de 10 à 500 parties en poids, de préférence de 20 à 300 parties en poids pour 100 parties d'éthylène.

3. Procédé selon la revendication 1 ou 2, **caractérisé en ce que** les teneurs en amorceur dans le flux primaire sont de 50 à 10.000 ppm en poids, de préférence de 50 à 1000 ppm et dans le flux secondaire de 100 à 10.000 ppm en poids, de préférence de 200 à 2000 ppm en poids, chaque fois par rapport au mélange de monomères.

4. Procédé selon une ou plusieurs des revendications 1 à 3, **caractérisé en ce que** les concentrations en régulateur dans le flux primaire et secondaire sont identiques ou différentes et sont de 0,05 à 20 % en poids par rapport au mélange de monomères.

5. Procédé selon la revendication 4, **caractérisé en ce que** la concentration en régulateur dans le flux primaire est de 0,1 à 10 % en poids et dans le flux secondaire de 0,1 1 à 5 % en poids, par rapport au mélange de monomères.

6. Procédé selon une ou plusieurs des revendications 1 à 5, **caractérisé en ce que** le rapport en volume du flux primaire au flux secondaire est de 1:0,2 à 5.

7. Procédé selon une ou plusieurs des revendications 1 à 6, **caractérisé en ce qu'**on utilise un, deux ou trois, notamment trois flux secondaires.

8. Procédé selon une ou plusieurs des revendications 1 à 7, **caractérisé en ce qu'**on utilise en tant que comonomères des esters vinyliques de formule 1

$$CH_2=CH\text{-}OCOR^1 \qquad (1)$$

où $R^1$ représente un groupe alkyle en $C_1$-$C_{30}$, de préférence alkyle en $C_1$-$C_{16}$, en particulier alkyle en $C_1$-$C_{12}$, et par exemple l'acétate de vinyle, le propionate de vinyle, le 2-éthylhexanoate de vinyle, le laurate de vinyle et le néononanoate, le néodécanoate et le néoundécanoate de vinyle.

9. Procédé selon une ou plusieurs des revendications 1 à 8, **caractérisé en ce qu'**on utilise en tant que comonomères des esters acryliques de formule 2

$$CH_2=CR^2\text{-}COOR^3 \qquad (2)$$

où $R^2$ représente un atome d'hydrogène ou un groupe méthyle et $R^3$ représente un groupe alkyle en $C_1$-$C_{30}$, de préférence alkyle en $C_1$-$C_{16}$, en particulier alkyle en $C_1$-$C_{12}$ et par exemple comprennent l'acrylate de méthyle et l'acrylate de 2-éthylhexyle.

**10.** Procédé selon une ou plusieurs des revendications 1 à 9, **caractérisé en ce qu'**on utilise en tant que comonomères des éthers alkylvinyliques de formule 3

$$CH_2=CH\text{-}OR^4 \qquad (3)$$

où $R^4$ représente un groupe alkyle en $C_1$-$C_{30}$, de préférence alkyle en $C_1$-$C_{16}$, en particulier alkyle en $C_1$-$C_{12}$.

**11.** Procédé selon une ou plusieurs des revendications 1 à 10, **caractérisé en ce qu'**on utilise en tant que comonomères des hydrocarbures à simple insaturation présentant 3 à 30, en particulier 4 à 16, spécialement 5 à 12 atomes de carbone, et de préférence l'isobutylène, le diisobutylène, le 4-méthylpentène, l'hexène, l'octène ou le norbornène.

**12.** Utilisation des copolymères préparés selon une ou plusieurs des revendications 1 à 10 seuls ou en mélange entre eux, en tant qu'additifs améliorants l'écoulement à froid des pétroles et distillats de pétrole.